# EUROPÄISCHE PATENTSCHRIFT

(11) **EP 1 533 973 B1**
(45) Veröffentlichungstag und Bekanntmachung des Hinweises auf die Patenterteilung: **06.03.2019**
(21) Anmeldenummer: 04025281.9
(22) Anmeldetag: 25.10.2004
(51) Int. Cl.: H04L 29/06

(54) **Einrichtung und Verfahren zur Feststellung einer Teilnehmerberechtigung im Internet**
System and method to detect a subscriber authorization in the Internet
Procédé et dispositif de détection de l'autorisation d'un participant dans l'internet

(30) Priorität: 27.10.2003 DE 10350217
(43) Veröffentlichungstag der Anmeldung: 25.05.2005
(73) Patentinhaber: Vodafone Holding GmbH, 40213 Düsseldorf (DE)
(72) Erfinder: Henniges, Kai, CH-8001 Zürich (CH)
(74) Vertreter: Weisbrodt, Bernd

(56) Entgegenhaltungen:
- EP-A- 1 102 157
- EP-A- 1 331 543
- EP-A- 1 566 945
- WO-A-00/44130
- WO-A-03/017612

## Beschreibung

### Technisches Gebiet

Die Erfindung betrifft eine Einrichtung zur Feststellung der Berechtigung eines Teilnehmers für den Zugang einer Internetseite mit Überprüfung der Zugangsberechtigung, wobei der Teilnehmer über einen an das Internet angeschlossenen Computer und ein auf den Teilnehmer zugelassenes Mobilfunkendgerät verfügt; die personenbezogenen Daten des Teilnehmers für die Zulassung seines Mobilfunkendgeräts in einem Mobilfunknetz in einem Datenspeicher des Mobilfunknetzbetreibers gespeichert sind, und
a) Mittel zum Verknüpfen der personenbezogenen Daten für die Teilnahme im Mobilfunknetz mit Prüfmitteln für den Zugang der Internetseite vorgesehen sind, wobei die Prüfmittel den Zugang zu der Internetseite für Berechtigte frei schalten, und
b) Mittel zur Übermittlung eines Zugangscodes für die Internetseite über das Mobilfunknetz an das Mobilfunkendgerät des Teilnehmers vorgesehen sind, welcher den Teilnehmer als Berechtigten für die Internetseite ausweisen.

Ferner betrifft die Erfindung ein Verfahren zur Feststellung der Berechtigung eines Teilnehmers für den Zugang einer Internetseite mit Überprüfung der Zugangsberechtigung, wobei der Teilnehmer über einen an das Internet angeschlossenen Computer und ein auf den Teilnehmer zugelassenes Mobilfunkendgerät verfügt; die personenbezogenen Daten des

Teilnehmers für die Zulassung seines Mobilfunkendgeräts in einem Mobilfunknetz in einem Datenspeicher des Mobilfunknetzbetreibers gespeichert sind, und
a) die personenbezogenen Daten für die Teilnahme im Mobilfunknetz mit dem Zugang der Internetseite verknüpft sind und überprüft werden, wobei der Zugang zu der Internetseite für Berechtigte freigeschaltet wird, und
b) ein Zugangscode für die Internetseite über das Mobilfunknetz an das Mobilfunkendgerät des Teilnehmers übermittelt wird, welcher den Teilnehmer als Berechtigten für die Internetseite ausweist. Die Einrichtung und das Verfahren werden durch die beiliegenden Ansprüche definiert.

### Stand der Technik

Internetseiten enthalten häufig Inhalte, die nicht jedem beliebigen zugänglich gemacht werden dürfen. Dabei handelt es sich beispielsweise um firmeninteme Internetseiten, die nur Firmenangehörigen und Kunden zugänglich gemacht werden sollen und auch Internetseiten mit nicht jugendfreien Inhalten. Um zu verhindern, dass jeder beliebige auf die "brisanten" Internetseiten zugreifen kann, ist derzeit eine geeignete Berichtigungsanfrage vorgesehen. Dazu erscheint auf dem Bildschirm eine Maske, in die ein Teilnehmer, der auf die fragliche Internetseite zugreifen möchte, zunächst einen Zugangschlüssel bzw. -code eingeben muss. Der Teilnehmer weist sich hierdurch als Zugangsberechtigter aus. Unberechtigten wird der Zugang zu dieser Internetseite verwehrt.

Das Ausweisen erfolgt üblicherweise mit einem persönlichen Code. Um diesen persönlichen Code zu erhalten, muss er sich unmittelbar an den Anbieter der Internetseite wenden. Dies ist für den Anbieter der Internetseite mit einem hohen Verwaltungsaufwand verbunden.

Es sind daher Firmen bekannt, die sich auf solche Authentifizierungsprobleme spezialisiert haben und mit den Anbietern von solchen fraglichen Internetseiten zusammenarbeiten. Ein potenzieller Teilnehmer für solche Internetseiten kann sich daher auch an einen so genannten Authentifizierungsservice wenden. Die Authentifizierung erfolgt beispielsweise dadurch, dass eine Kopie des Personalausweises an den Authentifizierungsservice übermittelt wird. Dieser überprüft die Daten des Personalausweises und verschickt, falls die Daten sich als korrekt erweisen, einen persönlichen Code an den potenziellen Teilnehmer. Dieser kann sich nun mit diesem Code Zugang auf die fragliche Internetseite verschaffen.

Zur Identifizierung kann ein Teilnehmer auch zur Post geschickt werden, wo er persönlich erscheinen und sich ausweisen muss. Die Post übernimmt dann gegen eine Gebühr die Überprüfung der Person.

Die Abwicklung für die Identifizierung bzw. Authentifizierung eines Teilnehmers kann daher nicht selten mehrere Tage benötigen und ist mit einem hohen Verwaltungsaufwand verbunden.

Die WO 00/44130 beschreibt ein Zugangsverfahren zur Nutzung von kostenpflichtigen Inhalten im Internet. Für einen Zugriff auf kostenpflichtige Inhalte wählt ein Benutzer beispielsweise "GSM-Zahlung" auf einer Internetseite eines Inhalte-Servers als Zahlungsart. Anschließend fordert der Benutzer mit einem Mobilfunkendgerät von einem Gateway mit Verbindung zu einem Mobilfunknetz und dem Internet eine temporäre PIN (Persönliche Identität Nummer) an. Die mit dem Mobilfunkendgerät vom Gateway empfangene temporären PIN gibt der Benutzer in seinen Computer für einen Zugriff auf Inhalte des Inhalte-Servers ein. Der Inhalte-Server übermittelt die PIN zur Überprüfung an das Gateway. Das Prüfergebnis des Gateways wird wiederum an den Inhalte-Server übermittelt, welcher daraufhin den Inhalt freigeben und eine Vergebührung an das Gateway schicken kann. Das Gateway verrechnet die Gebühren mit einem Mobilfunkkonto des Benutzers.

In der EP 1 331 543 A2 wird eine weitere Methode zum Überprüfen einer Zugangsberechtigung auf abspielbare Inhalte eines Inhalte-Servers im Internet dargestellt. Für einen Zugang zum Inhalte-Server wendet sich der Benutzer mit seinem Computer zunächst an ein System zum Erzeugen von Berechtigungsnachweisen im Internet und übermittelt Benutzerinformationen, z.B. sein Geburtsdatum. Das Berechtigungsnachweissystem überprüft diese Informationen und stellt einen Berechtigungsnachweis mit Informationen über den Benutzer, z.B. seinem Alter, aus. Für einen Zugriff auf Inhalte des Inhalte-Servers übermittelt der Benutzer den erhaltenen Berechtigungsnachweis an den Inhalte-Server, welcher nach einer Überprüfung des Berechtigungsnachweises angeforderte Inhalte freigeben kann. Statt einem Computer kann der Benutzer auch ein Mobilfunkendgerät mit Internetzugang verwenden.

Die EP 1 102 157 A1 beschreibt ein Verfahren und eine Anordnung zum gesicherten Anmelden eines Benutzers bei einem Applikationsserver in einem ungeschützten Datennetz. Wenn sich der Benutzer mit einem Computer beim Applikationsserver für eine Applikationssitzung anmelden möchte, wird zunächst seine Identität vom Applikationsserver zu einem Authentifikationscenter übermittelt, welches im Gegenzug eine Zeichenfolge als Schlüssel an den Applikationsserver sendet. Der Applikationsserver übermittelt die Zeichenfolge an den Computer des Benutzers, welcher diese mit seinem Mobilfunkendgerät als SMS an das Authentifikationscenter zurückschickt. Das Authentifikationscenter überprüft die vom Benutzer erhaltene Zeichenfolge und teilt dem Applikationsserver das Ergebnis mit.

### Offenbarung der Erfindung

Aufgabe der Erfindung ist es daher, eine Einrichtung bzw. ein Verfahren zu schaffen, um die Authentifizierung einer Person für die Zugangsberechtigung einer Internetseite zu beschleunigen.

Erfindungsgemäß wird die Aufgabe dadurch gelöst, daß bei einer Einrichtung der eingangs genannten Art zur Feststellung der Berechtigung eines Teilnehmers für den Zugang einer Internetseite mit Überprüfung der Zugangsberechtigung,
c) eine Altersverifikationseinheit des Mobilfunknetzbetreibers die personenbezogenen Daten zur Altersverifikation heranzieht und überprüft, wobei nur solche Teilnehmer berechtigt sind, die ein bestimmtes Alter aufweisen,
d) eine Computeranlage eines Anbieters der Internetseite den Zugangscode gleichzeitig mit der Übermittlung des Zugangscodes an das Mobilfunkendgerät erhält, und
e) die Computeranlage des Anbieters zur Überprüfung des vom Teilnehmer eingegebenen Zugangscodes mit dem von der Altersverifikationseinheit übermittelten Zugangscode und zur Freigabe der Internetseite für den Teilnehmer bei einer Übereinstimmung ausgebildet ist.

Weiterhin wird die Aufgabe durch ein Verfahren der eingangs genannten Art zur Feststellung der Berechtigung eines Teilnehmers für den Zugang einer Internetseite mit Überprüfung der Zugangsberechtigung gelöst, bei dem
c) ein Heranziehen und Überprüfen der personenbezogenen Daten zur Altersverifikation durch eine Altersverifikationseinheit des Mobilfunkbetreibers vorgesehen ist, wobei nur solche Teilnehmer berechtigt sind, die ein bestimmtes Alter aufweisen,
d) eine Computeranlage eines Anbieters der Internetseite den Zugangscode gleichzeitig mit dem Übermitteln des Zugangscodes an das Mobilfunkendgerät erhält, und
e) ein Überprüfen des von dem Teilnehmer eingegebenen Zugangscodes mit dem von der Altersverifikationseinheit übermittelten Zugangscodes und ein Freigeben der Internetseite für den Teilnehmer bei einer Übereinstimmung durch die Computeranlage des Anbieters erfolgt.

Mobilfunkendgeräte haben mittlerweile einen sehr hohen Verbreitungsgrad. Um ein Mobilfunkendgerät betreiben zu können, muss sich ein Teilnehmer bei einem Mobilfunknetzbetreiber anmelden. Der Mobilfunknetzbetreiber ist angehalten, sämtliche persönlichen Daten, welche zur Identifikation einer Person erforderlich sind, zu überprüfen. Ohne diese Überprüfung erhält ein potenzieller Teilnehmer für ein Mobilfunknetz keinen Mobilfunkzugang. Die Daten, die dabei aufgenommen werden, werden in einem Speicher des Mobilfunknetzes gespeichert. Sie dienen später als Grundlage, insbesondere zur Abrechnung, für den Mobilfunknetzbetreiber.

Dieser persönlichen Daten sind auch geeignet festzustellen, ob eine Person berechtigt ist, auf eine bestimmte Internetseite zuzugreifen oder nicht. Nach der Erfindung werden diese Daten nunmehr dazu verwendet, die Berechtigung eines Teilnehmers für den Zugang zu einer Internetseite zu überprüfen. Erweist sich jemand als berechtigt, so wird er Zugang zu dieser Seite erhalten. Die Feststellung, ob es sich wirklich um die fragliche Person handelt, die sich Zugang zu der Internetseite verschaffen möchte, liegt nun beim Mobilfunknetzbetreiber. Anhand der persönlichen Daten, die er bei der Anmeldung des Mobilfunknetzzugangs überprüft und gespeichert hat, kann der Mobilfunknetzbetreiber dem Betreiber einer fraglichen Internetseite beispielsweise mitteilen, ob die Person einem Berechtigungsprofil entspricht.

Als vorteilhafte Ausgestaltung der Erfindung hat sich erwiesen, wenn ein persönlicher Code an den Teilnehmer übermittelt wird, welcher den Teilnehmer als Berechtigten für die Internetseite ausweist. Hierzu erweist sich ebenfalls als vorteilhaft, wenn entsprechende Mittel zum Übermitteln des persönlichen Codes vorgesehen sind. Durch diese Maßnahme kann sich ein Teilnehmer unmittelbar den Zugang zu der Internetseite verschaffen.

Eine weitere bevorzugte Ausbildung der Erfindung ergibt sich dadurch, dass das Mobilfunknetz als Übermittlungsmedium für diesen persönlichen Code vorgesehen ist.

In einer geeigneten Ausgestaltung der erfindungsgemäßen Einrichtung sind Mittel zur Übermittlung des persönlichen Codes als SMS an den Teilnehmer vorgesehen. Damit kann der Teilnehmer seinen persönlichen Code beispielsweise über sein Mobilfunkendgerät empfangen, mit dem er sich schließlich im Internet auf die fraglichen Internetseiten Zugang verschaffen kann.

Eine weitere vorteilhafte Ausgestaltung der erfindungsgemäßen Einrichtung ergibt sich dadurch, dass Identifikationsmittel vorgesehen sind, welche den Teilnehmer als den Inhaber des Mobilfunkendgerätezugangs beim Mobilfunkbetreiber identifizieren. Um festzustellen ob ein Teilnehmer nicht den Mobilfunknetzzugang eines anderen verwendet, muss sich der Teilnehmer nochmals beim Mobilfunkbetreiber identifizieren. Bevorzugterweise übermitteln die Identifikationsmittel die MSISDN und/oder die Super-PIN des Mobilfunkendgeräts an den Mobilfunknetzbetreiber.

Weitere Vorteile ergeben sich aus dem Gegenstand der Unteransprüche.

### Kurze Beschreibung der Zeichnung

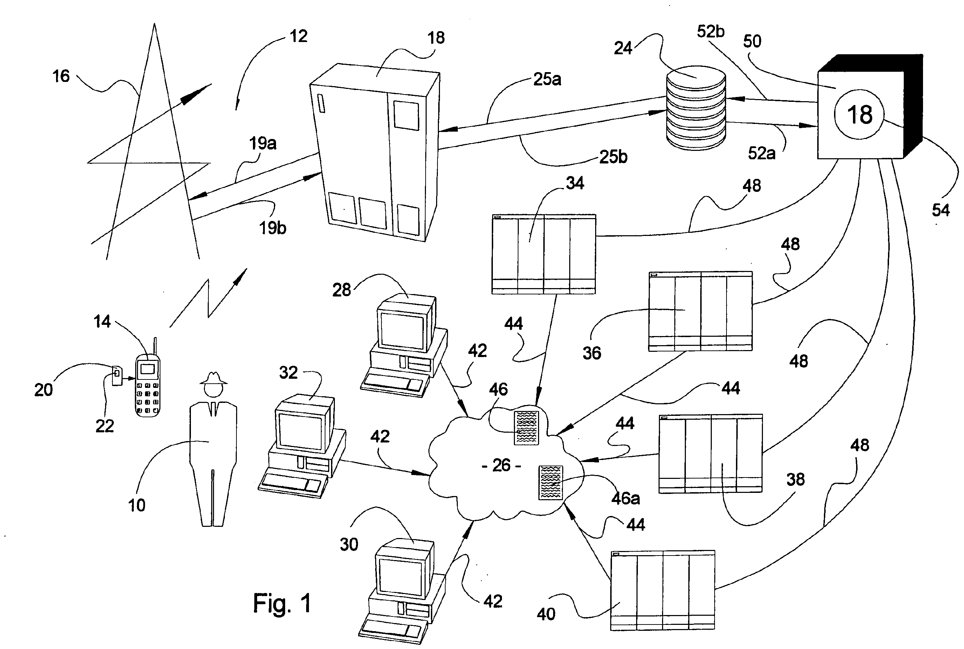

- Fig. 1: zeigt eine Einrichtung zur Feststellung der Berechtigung eines Teilnehmers für den Zugang einer Internetseite.

### Bevorzugtes Ausführungsbeispiel

In Fig. 1 wird mit 10 ein Teilnehmer für ein Mobilfunknetz 12 bezeichnet. Der Teilnehmer 10 verfügt über ein Mobilfunkendgerät 14, mit dem er sich an das Mobilfunknetz 12 einbuchen kann. Das Mobilfunknetz 12 arbeitet z.B. nach dem GSM- oder UMTS-Standard. Das Mobilfunknetz 12 wird durch einen Funkmast 16 und eine computergesteuerte Verwaltungseinheit 18 symbolisiert. Die bidirektionalen Verbindungen zwischen dem Funkmast 16 und der Verwaltungseinheit 18, welche beispielsweise als Kabel, Glasfaser oder auch als Richtfunkverbindungen ausgebildet sein können, werden mit 19a und 19b gekennzeichnet.

Um am Mobilfunk teilnehmen zu können, muss der Teilnehmer 10 sich eine Teilnehmeridentifikationskarte, auch mit SIM-Karte 20 bezeichnet, beschaffen. Diese wird zum Betreiben des Mobilfunkendgeräts 14 benötigt. Die SIM-Karte 20 wird in das Mobilfunkendgerät 14 eingesetzt. Der Teilnehmer 10 erhält eine solche SIM-Karte 20 beim Mobilfunknetzbetreiber. Sie enthält einen Chip 22, auf dem ein individueller Code gespeichert ist. Dieser Code wird mit den Identifikationsdaten des Teilnehmers 10 verknüpft und in einem Datenspeicher 24 der Verwaltungseinheit 18 des Mobilfunknetzes 12 gespeichert. Die Verwaltungseinheit 18 hat unbeschränkten Datenzugriff auf die Datenspeicher 24, was mit Pfeilen 25a, 25b symbolisiert wird. Der Teilnehmer 10 muss sich für den Erhalt einer SIM-Karte 20 beim Mobilfunkbetreiber ausweisen. Anhand des Codes auf der SIM-Karte 20 kann der Mobilfunkbetreiber den Teilnehmer 10 eindeutig zuordnen und identifizieren und je nach Dauer seiner Verbindungen richtet sich letztlich die Höhe seiner Rechnung.

Um die SIM-Karte 20 zu erhalten, muss der Teilnehmer 10 voll geschäftsfähig sein, d.h. er muss, zumindest gilt dies in Deutschland, die Volljährigkeit erlangt haben. Das Geburtsdatum wird dann mit den übrigen Identifikationsdaten in dem Speicher 24 der Verwaltungseinheit 18 gespeichert.

Das wolkenförmige Gebilde stellt symbolisch in Fig. 1 das Internet 26 dar. Das Internet 26 ist ein globales Computernetzwerk, von denen beispielhaft drei Computer 28, 30, 32 gezeigt sind. Darunter ist auch der Computer 32 des Teilnehmers 10, der mit dem Internet 26 beispielsweise über ein Modem verbunden ist. Über das Internet 26 kann auf Internetseiten 46, 46a zugegriffen werden, die ggf. auch miteinander verlinkt, d.h. verknüpft sind. Anbieter von Internetseiten 46, 46a verfügen ebenfalls über Computeranlagen 34, 36, 38, 40, um ihre Internetseiten 46, 46a für Nutzer des Internets 26 zugänglich zu machen. Die Anbieter werden in vorliegender Abbildung durch ihre Computeranlagen 34, 36, 38, 40 repräsentiert. Die Computeranlagen 34, 36, 38, 40 sind ebenfalls mit dem Internet 26 vernetzt. Die Verknüpfung der Computeranlagen 34, 36, 38, 40 der Anbieter bzw. auch die Verknüpfung der Computer 28, 30, 32 jeweils mit dem Internet 26, welche üblicherweise bidirektional ausgebildet ist, wird durch Pfeile 42, 44 symbolisiert.

Es werden Internetseiten 46a angeboten, für deren Zugriff ein Teilnehmer im Internet 26 eine Berechtigung benötigt. Beispielsweise, wenn nicht jugendfreie Internetseiten 46a über das Internet zugänglich gemacht werden sollen, sind Altersüberprüfungen erforderlich. Die Anbieter von Internetseiten haben über Verbindungen 48 jeweils Zugriff auf eine Altersverifikationseinheit 50 des Mobilfunkanbieters, der bereits sämtliche relevanten Daten bei der Ausgabe der SIM-Karte 20 erfasst hat.

Diese Altersverifikationseinheit 50 überprüft nun, ob der Teilnehmer 10 über die erforderliche Berechtigung für eine Internetseite 46a verfügt. Die Altersverifikationseinheit 50 ist dazu über geeignete Verbindungen 52a, 52b mit dem Datenspeicher 24 verknüpft. Im vorliegenden Ausführungsbeispiel sind Verwaltungseinheit 18, Datenspeicher 24 und Altersverifikationseinheit 50 separat dargestellt. Sie können problemlos auch in einer integralen Einheit untergebracht werden.

Der Teilnehmer 10 muss nun eine geeignete PIN (=Personal Identification Number) in sein Mobilfunkendgerät 14 eingeben, so dass festgestellt werden kann, ob es sich wirklich um den berechtigten Teilnehmer 10 handelt. Durch die Eingabe einer persönlichen PIN wird vermieden, dass sich Unberechtigte des Mobilfunkendgeräts des berechtigten Teilnehmers 10 bedienen.

Weisen die Identifikationsdaten, das Alter und die PIN den Teilnehmer 10 als Berechtigten aus, wird dem Teilnehmer 10 ein gesonderter Zugangscode für die spezielle Internetseite 46a z.B. als SMS (=Short Message Service) auf sein Mobilfunkendgerät 14 übermittelt. Gleichzeitig erhält der Anbieter 40 der Internetseite 46a diesen Zugangscode 54. Mit diesem Zugangscode 54 wird dem Teilnehmer 10 ein Zugreifen auf die Internetseite 46a ermöglicht. Der Anbieter 40 der Internetseite 46 überprüft dazu nur noch den durch den Teilnehmer 10 eingegebenen Zugangscode 54 mit dem von dem von der Altersverifikationseinheit 50 übermittelten Zugangscode 54. Stimmen die beiden Zugangscodes überein, wird die Internetseite 46a für den Teilnehmer 10 freigegeben.

## Patentansprüche

1. Einrichtung (Figur 1) zur Feststellung der Berechtigung eines Teilnehmers (10) für den Zugang zu einer Internetseite (46a) mit Überprüfung der Zugangsberechtigung, wobei der Teilnehmer (10) über einen an das Internet (26) angeschlossenen Computer (32) und ein auf den Teilnehmer (10) zugelassenes Mobilfunkendgerät (14) verfügt, wobei die Einrichtung folgendes umfasst;
personenbezogenen Daten des Teilnehmers (10) für die Zulassung seines Mobilfunkendgerätes, die in einem Mobilfunknetz in einem Datenspeicher (24) des Mobilfunknetzbetreibers gespeichert sind, und
- Mittel (12) zur Übermittlung eines Zugangscodes (54) für die Internetseite (46a) über das Mobilfunknetz (12) an das Mobilfunkendgerät (14) des Teilnehmers (10) vorgesehen sind, wobei der Zugangscode (54) den Teilnehmer (10) als Berechtigten für die Internetseite (46a) ausweist,
- Mittel (48, 52a, 52b) zum Verknüpfen der personenbezogenen Daten für die Teilnahme im Mobilfunknetz (12) mit Prüfmitteln (50) für den Zugang zu der Internetseite (46a) vorgesehen sind, wobei die Prüfmittel (50) den Zugang zu der Internetseite für Berechtigte frei schalten,
- eine Computeranlage (40) eines Anbieters der Internetseite (46a), **dadurch gekennzeichnet, dass** die Computeranlage (40) des Anbieters den Zugangscode (54) gleichzeitig mit der Übermittlung des Zugangscodes (54) an das Mobilfunkendgerät (12) erhält, und
- die Computeranlage (40) des Anbieters zur Überprüfung des vom Teilnehmer (10) eingegebenen Zugangscodes (54) mit dem von den Prüfmitteln (50) übermittelten Zugangscode (54) und zur Freigabe der Internetseite (46a) für den Teilnehmer (10) bei einer Übereinstimmung ausgebildet ist.

2. Einrichtung zur Feststellung der Berechtigung eines Teilnehmers (10) für den Zugang einer Internetseite (46a) mit Überprüfung der Zugangsberechtigung nach Anspruch 1, **dadurch gekennzeichnet, dass** Mittel (12) zur Übermittlung des Zugangscodes (54) als SMS an den Teilnehmer (10) vorgesehen sind.

3. Einrichtung zur Feststellung der Berechtigung eines Teilnehmers (10) für den Zugang einer Internetseite (46a) mit Überprüfung der Zugangsberechtigung nach einem der Ansprüche 1 bis 2, **dadurch gekennzeichnet, dass** Identifikationsmittel (50) vorgesehen sind, welche den Teilnehmer (10) als den Inhaber des Mobilfunkendgerätezugangs beim Mobilfunkbetreiber identifizieren.

4. Einrichtung zur Feststellung der Berechtigung eines Teilnehmers (10) für den Zugang einer Internetseite (46a) mit Überprüfung der Zugangsberechtigung nach Anspruch 3, **dadurch gekennzeichnet, dass** als Identifikationsmittel die MSISDN und/oder eine PIN und/oder Super-PIN an den Mobilfunkbetreiber übermittelt wird.

5. Verfahren zur Feststellung der Berechtigung eines Teilnehmers (10) für den Zugang zu einer Internetseite (46a) mit Überprüfung der Zugangsberechtigung, wobei der Teilnehmer (10) über einen an das Internet (26) angeschlossenen Computer (32), und ein auf den Teilnehmer (10) zugelassenes Mobilfunkendgerät (14) verfügt; und personenbezogenen Daten des Teilnehmers (10) für die Zulassung seines Mobilfunkendgeräts (14) in einem Mobilfunknetz (12) in einem Datenspeicher (24) des Mobilfunknetzbetreibers gespeichert sind, und
- ein Zugangscode (54) für die Internetseite (46a) über das Mobilfunknetz (12) an das Mobilfunkendgerät (14) des Teilnehmers (10) übermittelt wird, welcher den Teilnehmer (10) als Berechtigten für die Internetseite (46a) ausweist,
- die personenbezogenen Daten für die Teilnahme im Mobilfunknetz (12) mit dem Zugang der Internetseite (46a) verknüpft sind und überprüft werden, wobei der Zugang zu der Internetseite (46a) für Berechtigte freigeschaltet wird,
- eine Computeranlage (40) eines Anbieters der Internetseite (46a), **dadurch gekennzeichnet, dass** die Computeranlage (40) des Anbieters den Zugangscode (54) gleichzeitig mit dem Übermitteln des Zugangscodes (54) an das Mobilfunkendgerät (14) erhält, und
- ein Überprüfen des von dem Teilnehmer (10) eingegebenen Zugangscodes (54) mit dem von den Prüfmitteln (50) übermittelten Zugangscodes (54) und ein Freigeben der Internetseite (46a) für den Teilnehmer (10) bei einer Übereinstimmung durch die Computeranlage (40) des Anbieters erfolgt.

6. Verfahren zur Feststellung der Berechtigung eines Teilnehmers (10) für den Zugang einer Internetseite (46a) mit Überprüfung der Zugangsberechtigung nach Anspruch 5, **dadurch gekennzeichnet, dass** der Zugangscode (54) als SMS an den Teilnehmer (10) übermittelt wird.

7. Verfahren zur Feststellung der Berechtigung eines Teilnehmers (10) für den Zugang einer Internetseite (46a) mit Überprüfung der Zugangsberechtigung nach einem der Ansprüche 5 bis 6, **dadurch gekennzeichnet, dass** der Teilnehmer (10) sich als den Inhaber des Mobilfunkendgerätezugangs beim Mobilfunkbetreiber identifiziert.

8. Verfahren zur Feststellung der Berechtigung eines Teilnehmers (10) für den Zugang einer Internetseite (46a) mit Überprüfung der Zugangsberechtigung nach Anspruch 7, **dadurch gekennzeichnet, dass** die MSISDN und/oder eine PIN und/oder eine Super-PIN an den Mobilfunkbetreiber zur Identifikation übermittelt wird.

9. Verfahren zur Feststellung der Berechtigung eines Teilnehmers (10) für den Zugang einer Internetseite (46a) mit Überprüfung der Zugangsberechtigung nach einem der Ansprüche 5 bis 8, **dadurch gekennzeichnet, dass** die personenbezogenen Daten zur Altersverifikation herangezogen werden, wobei nur solche Teilnehmer (10) berechtigt sind, die ein bestimmtes Alter aufweisen.

## Claims

1. A device (figure 1) for determining a subscriber's (10) authorization of access to an internet page (46a) with verification of the authorization of access, wherein the subscriber (10) has a computer (32) connected to the internet (26) and a mobile terminal (14) registered to the subscriber (10), wherein the device comprises the following:
personal data of the subscriber (10) for the registration of his mobile terminal which are stored in a mobile radio network in a data storage (24) of the mobile radio network provider, and
- means (12) for transmitting an access code (54) for the internet page (46a) via the mobile radio network (12) to the mobile terminal (14) of the subscriber (10) are provided, wherein the access code (54) identifies the subscriber (10) as being authorized for the internet page (46a),
- means (48, 52a, 52b) for linking the personal data for using the mobile radio network (12) with verification means (50) allowing the access to the internet page (46a) are provided, wherein the verification means (50) grant the access to the internet page (46a) for authorized persons,
- a computer system (40) of a provider of the internet page (46a), **characterized in that** the computer system (40) of the provider receives the access code (54) simultaneously with the transmission of the access code (54) to the mobile radio terminal (12), and
- the computer system (40) of the provider is configured to validate the access code (54) entered by the subscriber (10) with the access code (54) transmitted by the verification means (50) and to share the internet page (46a) to the subscriber (10) in case of a match.

2. A device for determining a subscriber's (10) authorization of access to an internet page (46a) with verification of the authorization of access according to claim 1, **characterized in that** means (12) are provided for transmitting the access code (54) via SMS to a subscriber (10).

3. A device for determining a subscriber's (10) authorization of access to an internet page (46a) with verification of the authorization of access according to one of the claims 1 through 2, **characterized in that** identification means (50) are provided which identify the subscriber (10) as the owner of the mobile terminal access with the mobile radio network operator.

4. A device for determining a subscriber's (10) authorization of access to an internet page (46a) with verification of the authorization of access according to claim 3, **characterized in that** the MSISDN and/or a PIN and/or a super PIN are transmitted as identification means to the mobile radio network operator.

5. A method for determining a subscriber's (10) authorization of access to an internet page (46a) with verification of the authorization of access, wherein the subscriber (10) has a computer (32) connected to the internet (26) and a mobile terminal (14) registered to the subscriber (10);
and wherein the personal data of the subscriber (10) is stored in a data memory (24) of the mobile radio network provider for registering the subscriber's (10) mobile terminal (14) in the mobile radio network (12), and
- an access code (54) of the internet page (46a) is transmitted via the mobile radio network (12) to the mobile terminal (14) of the subscriber (10), wherein the access code identifies the subscriber (10) as being authorized for the internet page (46a),
- the personal data for using the mobile radio network (12) are linked with the access to the internet page (46a) and are verified, wherein the access to the internet page (46a) will be granted for authorized persons,
- a computer system (40) of a provider of the internet page (46a), **characterized in that** the computer system (40) of the provider receives the access code (54) simultaneously with the transmission of the access code (54) to the mobile terminal (14) and
- the computer system (40) of the provider validates the access code (54) entered by the subscriber (10) with the access code (54) transmitted by the verification means (50) and shares the internet page (46a) for the subscriber (10) in case of a match.

6. A method for determining a subscriber's (10) authorization of access to an internet page (46a) with verification of the authorization of access according to claim 5, **characterized in that** the access code (54) will be transmitted via SMS to the subscriber (10).

7. A method for determining a subscriber's (10) authorization of access to an internet page (46a) with verification of the authorization of access according to one of the claims 5 through 6, **characterized in that** the subscriber identifies himself as the owner of the mobile terminal access with the mobile radio network operator.

8. A method for determining a subscriber's (10) authorization of access to an internet page (46a) with verification of the authorization of access according to claim 7, **characterized in that** the MSISDN and/or a PIN and/or a super PIN will be transmitted to the mobile radio network operator for identification.

9. A method for determining a subscriber's (10) authorization of access to an internet page (46a) with verification of the authorization of access according to one of the claims 5 through 8, **characterized in that** the personal data is used for verifying the age, wherein only such subscribers (10) are authorized who have a certain age.

## Revendications

1. Dispositif (figure 1) destiné à déterminer l'autorisation d'un abonné (10) de l'accès à une page internet (46a) avec la vérification de l'autorisation d'accès, l'abonné (10) possédant un ordinateur (32) raccordé à l'internet (26) et un terminal mobile (14) immatriculé pour l'abonné (10), le dispositif comprenant le suivant:
des données personnelles de l'abonné (10) pour l'immatriculation de son terminal mobile, lesquelles sont mémorisées dans un réseau radio mobile dans une mémoire de données (24) de l'opérateur de réseau radio mobile ; et
- des moyens (12) sont prévus pour la transmission d'un code d'accès (54) à la page internet (46a) via le réseau radio mobile (12) au terminal mobile (14) de l'abonné (10), le code d'accès (54) identifiant l'abonné (10) comme une personne ayant droit à la page internet (46a),
- des moyens (48, 52a, 52b) sont prévus pour relier les données personnelles pour l'utilisation du réseau mobile (12) à des moyens de vérification de l'accès à la page internet (46a), les moyens de vérification (50) activant l'accès à la page internet pour des personnes autorisées;
- un système informatique (40) d'un fournisseur de la page internet (46a), **caractérisé en ce que** le système informatique (40) du fournisseur reçoit le code d'accès (54) simultanément avec la transmission du code d'accès (54) au terminal mobile (12), et
- le système informatique (40) du fournisseur est configuré pour comparer le code d'accès (54) entré par l'abonné (10) avec le code d'accès (54) transmis par les moyens de vérification (50) et pour activer la page internet (46a) pour l'abonné (10) si les deux codes correspondent.

2. Dispositif destiné à déterminer l'autorisation d'un abonné (10) de l'accès à une page internet (46a) avec la vérification de l'autorisation d'accès selon la revendication 1, **caractérisé en ce que** des moyens (12) de transmission du code d'accès (54) comme SMS à l'abonné (10) sont prévus.

3. Dispositif destiné à déterminer l'autorisation d'un abonné (10) de l'accès à une page internet (46a) avec la vérification de l'autorisation d'accès selon l'une des revendications 1 à 2, **caractérisé en ce que** des moyens d'identification (50) sont prévus, qui identifient l'abonné (10) comme une personne ayant le droit d'accès au terminal mobile chez l'opérateur mobile.

4. Dispositif destiné à déterminer l'autorisation d'un abonné (10) de l'accès à une page internet (46a) avec la vérification de l'autorisation d'accès selon la revendication 3, **caractérisé en ce que** la MSISDN et/ou une PIN et/ou une super-PIN sera transmise comme moyen d'identification à l'opérateur mobile.

5. Procédé destiné à déterminer l'autorisation d'un abonné (10) de l'accès à une page internet (46a) avec la vérification de l'autorisation d'accès, l'abonné (10) possédant un ordinateur (32) raccordé à l'internet (26) et un terminal mobile (14) immatriculé pour l'abonné (10), et
des données personnelles de l'abonné (10) pour l'immatriculation de son terminal mobile (14) sont mémorisées dans un réseau radio mobile (12) dans une mémoire de données (24) de l'opérateur de réseau radio mobile ; et
- un code d'accès (54) à la page internet (46a) sera transmis via le réseau radio mobile (12) au terminal mobile (14) de l'abonné (10), lequel code d'accès (54) identifie l'abonné (10) comme une personne ayant le droit d'accès à la page internet (46a),
- les données personnelles pour l'utilisation du réseau radio mobile (12) sont reliées à l'accès à la page internet (46a) et seront vérifiées, l'accès à la page internet (46a) étant activé pour des personnes autorisées,
- un système informatique (40) du fournisseur de la page internet (46a) est prévu, **caractérisé en ce que** le système informatique (40) du fournisseur reçoit le code d'accès (54) simultanément avec la transmission du code d'accès (54) au terminal mobile (14), et
- le système informatique (40) du fournisseur compare le code d'accès (54) entré par l'abonné (10) avec le code d'accès (54) transmis par les moyens de vérification (50) et fait activer la page internet (46a) pour l'abonné (10) si les deux codes correspondent.

6. Procédé destiné à déterminer l'autorisation d'un abonné (10) de l'accès à une page internet (46a) avec la vérification de l'autorisation d'accès selon la revendication 5, **caractérisé en ce que** le code d'accès (54) sera transmis comme SMS à l'abonné (10).

7. Procédé destiné à déterminer l'autorisation d'un abonné (10) de l'accès à une page internet (46a) avec la vérification de l'autorisation d'accès selon l'une des revendications 5 à 6, **caractérisé en ce que** l'abonné (10) s'identifie comme la personne ayant le droit d'accès au terminal mobile chez l'opérateur mobile.

8. Procédé destiné à déterminer l'autorisation d'un abonné (10) de l'accès à une page internet (46a) avec la vérification de l'autorisation d'accès selon la revendication 7, **caractérisé en ce que** la MSISDN et/ou une PIN et/ou une super-PIN sera transmise à l'opérateur mobile pour l'identification.

9. Procédé destiné à déterminer l'autorisation d'un abonné (10) de l'accès à une page internet (46a) avec la vérification de l'autorisation d'accès selon l'une des revendications 5 à 8, **caractérisé en ce que** les données personnelles seront utilisées pour vérifier l'âge, de tels abonnes (10) n'étant autorisés que ceux qui ont un certain âge.
